# EUROPÄISCHE PATENTSCHRIFT

(11) **EP 2 539 982 B1**
(45) Veröffentlichungstag und Bekanntmachung des Hinweises auf die Patenterteilung: **18.03.2015**
(21) Anmeldenummer: 11713975.8
(22) Anmeldetag: 24.01.2011
(51) Int. Cl.: H02G 3/18

(54) **VORRICHTUNG ZUR DURCHFÜHRUNG EINER ODER MEHRERER LEITUNGEN DURCH EINE ÖFFNUNG IN EINER WAND ODER EINEM BODEN**
DEVICE FOR FEEDING ONE OR MORE LINES THROUGH AN OPENING IN A WALL OR A FLOOR
DISPOSITIF DESTINÉ AU PASSAGE D'UN OU DE PLUSIEURS CÂBLES À TRAVERS UNE OUVERTURE MÉNAGÉE DANS UNE PAROI OU UN SOL

(30) Priorität: 25.01.2010 DE 102010005950
(43) Veröffentlichungstag der Anmeldung: 02.01.2013
(73) Patentinhaber: Daxten Limited, Clonmel, Co Tipperary (IE)
(72) Erfinder: AMIN, Bhavik, 14199 Berlin (DE)
(74) Vertreter: Bolik, Ralf
(86) Internationale Anmeldenummer: PCT/DE2011/000081
(87) Internationale Veröffentlichungsnummer: WO 2011/088828

(56) Entgegenhaltungen:
- EP-A1- 1 209 786
- EP-A1- 2 065 992
- WO-A2-03/023922
- US-A- 5 486 664
- US-A- 5 546 895
- US-B1- 7 507 912

## Beschreibung

Die Erfindung betrifft eine Vorrichtung zur Durchführung einer oder mehrerer Leitungen durch eine Öffnung in einer Wand oder einem Boden, mit einem in der Öffnung angeordneten Rahmen.

Vielfach ist es notwendig Leitungen durch Wände, Böden, Dächer oder ähnliche Abtrennungen durchzuführen. Hierbei werden die Leitungen oft durch Löcher durchgeführt, die entweder offen bleiben oder mit Dichtungsmaterial, wie Mörtel, Gips oder Silikon, geschlossen werden. Dies führt jedoch dazu, dass, wenn man die Löcher nicht abdichtet, ein Gas- und/oder Temperaturaustausch durch die Löcher möglich ist. Sind die Löcher abgedichtet, so ist ein Austausch der Leitungen nur durch ein Entfernen des Dichtungsmaterials möglich.

Beim Verlegen von Leitungen, wie beispielsweise Stromleitungen, Netzwerkkabeln, Telefonleitungen, ist es häufig notwendig, diese durch Tischplatten, Schrankwände, Gebäudewände, Gehäuseabdeckungen, Fußböden oder Doppelböden durchzuführen. Dabei müssen die Leitungen so verlegt werden, dass ein schneller Austausch möglich ist, die Durchführungsöffnung aber derart gut verschlossen ist, dass es nicht zu einem Temperaturaustausch oder einer Verschmutzung durch die Durchführungsöffnung hindurch kommen kann.

In der DE 101 51 812 C1 wird eine Vorrichtung zum Einführen von Kabeln durch eine in eine Gehäusewand eingebrachte Kabeleinführungsöffnung, insbesondere eine Bodenöffnung eines Schaltschrankes, mit einer in die Kabeleinführungsöffnung einsetzbaren Kabeleinführungstülle beschrieben. Die Kabeleinführungstülle besteht dabei aus einem in die Kabeleinführungsöffnung der Gehäusewand einsetzbaren, ringförmigen Grundkörper, der auf seiner Innenwand radial abstehende Bürstenborsten unterschiedlicher Länge trägt, wodurch eine Abdichtung der eingeführten Kabel erzielt wird. Kabel können so durch die Lagen von Bürstenborsten geschoben werden. Dabei werden die Bürstenborsten ausgelenkt und abgebogen. Die Bürstenborsten schmiegen sich aufgrund ihrer Eigenelastizität an die Kabel an und dichten diese unabhängig von der belegten Außenkontur des Kabelbündels allseitig ab. Werden Kabel entfernt, erfolgt eine automatische Rückstellung der frei werdenden Bürstenborsten.

Nachteil dieser Ausführungsform ist, dass die Bürstenborsten nicht einzeln ausgetauscht werden können, wenn diese verschmutzt oder beschädigt sind. Sondern es ist notwendig, die ganze Vorrichtung auszuwechseln. Zudem ist die Vorrichtung bauartbedingt derart ausgelegt, dass sie aus der Fläche mit der Öffnung in die sie eingebracht ist herausragt und somit im Falle einer Installation auf einem Fussboden ein Hindernis darstellt.

In der WO 03/023922 A2 wird eine Vorrichtung zur Durchführung von Leitungen durch eine Öffnung in einer Wand oder einem Boden, mit einem in der Öffnung angeordneten Rahmen, der einen Absatz zur Aufnahme eines Deckels besitzt, wobei die Öffnung mit einem Deckel gasdicht verschliessbar sind, beschrieben. Weiterhin sind in der Durchführungsöffnung zum Abdecken Bürstenborsten mit Fixiermitteln in einem Bürstenborstenkanal angeordnet.

Nachteil dieser Ausführungsform ist, dass die Bürstenborsten nur durch Ausbau der kompletten Vorrichtung ausgetauscht werden können.

Aufgabe der Erfindung ist es daher, eine Vorrichtung der eingangs beschriebenen Art bereitzustellen, bei der eine oder mehrere Leitungen durch eine Öffnung in einer Wand oder einem Boden durchgeführt werden können und die einen leichten Austauschen von Bauteilen, insbesondere der Bürstenborsten, ermöglicht.

Die Aufgabe der vorliegenden Erfindung wird durch eine Vorrichtung gemäß Anspruch 1 gelöst.

Leitungen im Sinne der Anmeldung sind beispielsweise Kabel bzw. Kabelleitungen, Rohre, LAN-Kabel, Schläuche, Stangen, Seile, Glasfaserleitungen oder ähnliche Stränge, die durch eine Öffnung in einer Wand oder einem Boden geleitet werden, wobei vermieden werden soll, dass durch die Öffnung Verunreinigungen gelangen oder ein Wärmeaustausch stattfindet.

Die Öffnung (bzw. ein Ausschnitt) kann dabei jede beliebige Öffnung in einer Wand oder einem Boden sein, wobei die Wand eine Gebäudewand, ein Dach, eine Wand eines Gehäuses oder eines Möbelstücks, beispielsweise eines Server- oder Schalterschrankes und der Boden ein Fußboden, ein Doppelboden, insbesondere der Doppelboden eines Rechencenters, eine Bodenfläche eines Schrankes, Gehäuses oder ähnliches sein kann.

Die erfindungsgemäße Vorrichtung zur Durchführung von Leitungen kann mit dem Deckel, beispielsweise einer (Sicherheits-)Platte, abgedeckt bzw. geschlossen werden, wenn sie nicht für eine Durchführung von Leitungen verwendet wird. Dies hat den Vorteil, dass wenn es sich um eine Installation der Vorrichtung auf einem Fussboden oder Doppelboden handelt, die Öffnung im Fussboden oder Doppelboden geschlossen und damit begehbar wird.

Damit die Vorrichtung die notwendige Stabilität aufweist, besteht der Rahmen und der Deckel aus einem festen Kunststoff oder einem Metall, wie beispielsweise aus Stahl, Aluminium, Eisen oder Messing.

Auch bei einer Installation an einer Wand oder Decke kann es sinnvoll sein, die nicht gebrauchte Öffnung zu verschließen, um zum Beispiel einen Luft- und/oder Wärmeaustausch zu unterbinden. Bei einer Installation an einer Wand oder einer (Gehäuse-)Decke weist der Deckel oder der Rahmen Befestigungsvorrichtungen, wie beispielsweise eine Verriegelung oder einen Einklemmmechanismus auf, mit denen der Deckel gegen ein Herausfallen gesichert wird.

Ein Vorteil der erfindungsgemäßen Vorrichtung ist, dass man beschädigte oder verunreinigte Bürstenborsten leicht ausbauen kann, da die Bürstenborsten durch Fixiermittel reversibel mit der Innenwand der Durchführungsöffnung verbunden sind.

Bevorzugt sind die Fixiermittel Klemmen, Schrauben, Bolzen und/oder Stifte. Büschel der Bürstenborsten oder eine Bürstenborstenleiste wird dazu in Aussparungen oder einem Bürstenborstenkanal an der Innenseite der Durchführungsöffnung positioniert und mit den Fixiermitteln gegen ein Herausrutschen befestigt. Eine Bürstenborstenleiste mit einer Gummileiste kann beispielsweise in einen Bürstenkanal gequetscht/eingeklemmt werden, um fixiert zu werden. Es ist aber auch denkbar, eine Bürstenbortenleiste, die eine Bohrung aufweist durch einen Bolzen oder einen Stift, den man durch die Bohrung schiebt, zu verriegeln. Weiterhin ist es denkbar die Bürstenborsten mit einer Verschraubung gegen ein Lösen von der Innenwand zu sichern.

Die Fixiermittel sind vorzugsweise durch die Durchführungsöffnung bedienbar, so dass die Bürstenborsten durch die Durchführungsöffnung austauschbar sind. Eine Bedienung durch die Durchführungsöffnung bedeutet beispielsweise, dass bei einer Verschraubung die Schrauben derart angeordnet sind, dass sie durch die Durchführungsöffnung hindurch festgezogen oder gelöst werden können. Hierzu muss der Deckel zuvor entfernt werden.

Durch eine solche Anordnung ist ein vollständiger Ausbau der Vorrichtung zu Wartungszwecken nicht notwendig. Zudem können zusätzliche Bürstenborsten nachträglich befestigt werden, ohne dass die Vorrichtung vollständig zerlegt bzw. ausgebaut werden muss.

Vorzugsweise verschließt der Deckel die Durchführungsöffnung gasdicht. Dies hat den Vorteil, dass ein Austritt von Gas, wie beispielsweise Luft, durch die Durchführungsöffnung vermindert oder vollständig verhindert wird. Hierzu kann der Deckel oder die Innenwand der Durchführungsöffnung auf der der Deckel aufliegt mit einer Dichtung, beispielsweise einer Gummidichtung, versehen sein.

Bevorzugt weist der Deckel mindestens eine Eingriffsöffnung auf. Eine solche Eingriffsöffnung erleichtet es den Deckel beim Öffnen anzuheben. Hierzu können ein oder mehrere Eingriffsöffnungen am Deckel angeordnet sein, die für ein Eingreifen mit den Fingern ausgelegt sind. Eine Ausführungsform mit zwei Eingriffsöffnungen hat sich als zweckmäßig erwiesen, da ein Eingreifen mit Daumen und Zeigefinger einer Hand ein leichtes Öffnen des Deckels ermöglicht. Der Deckel kann somit ohne Werkzeug geöffnet und geschlossen werden.

Weiter bevorzugt ist auf einer Seite des Deckels ein Gehäuse angebracht, dass einen Gasaustausch durch die Eingriffsöffnungen verhindert. Das Gehäuse ist unterhalb der Eingriffslöcher angeordnet, so dass der Deckel trotz der Eingriffsöffnungen gasdicht bleibt.

Eine weitere Möglichkeit zum Anheben des Deckels ist ein in dem Deckel versenkbarer Griff.

Die Innenwand der Durchführungsöffnung weist vorzugsweise einen Absatz auf, auf dem der Deckel reversibel angeordnet ist. Durch diesen Absatz wird der Deckel gegen ein Verrutschen gesichert.

In einer bevorzugten Ausführungsform der Erfindung bilden der Rahmen und der auf dem Absatz der Innenwand der Durchführungsöffnung angeordnete Deckel eine Ebene. Hierdurch bildet die Vorrichtung eine flache Oberfläche, die nicht nur aus ästhetischen Gründen, sondern auch um Verletzungen zu verhindern von Vorteil ist.

In einer weiteren bevorzugten Ausführungsform ist der Rahmen in der Öffnung in der Wand oder dem Boden versenkt, so dass die Vorrichtung und die Wand oder der Boden eine Ebene bilden. Dies hat insbesondere bei einer Installation der erfindungsgemäßen Vorrichtung auf einem Fussboden den Vorteil, dass ein Stolpern über die Vorrichtung verhindert wird, so dass die Vorrichtung beispielsweise auch in der Mitte eines Raumes positioniert werden kann. Zudem wird das Reinigen der Wand oder des Bodens erleichtert, da Reinigungsmittel (Lappen, Staubsauger etc.) nicht an die Vorrichtung stoßen oder an ihr hängenbleiben.

Zur Befestigung der Vorrichtung in der Öffnung wird sie in die Wand oder den Boden so weit versenkt, dass Boden und Oberfläche der Vorrichtung eine Ebene bilden. Die Fixierung erfolgt dann durch Verschrauben, Einrasten oder Verkleben des äußeren Randes der Vorrichtung mit dem inneren Rand der Öffnung in der Wand oder dem Boden.

Die Vorrichtung kann aber auch ein Modul einer aus Platten aufgebauten (Gehäuse-)Wand bzw. eines (Gehäuse-)Bodens sein. So kann die Vorrichtung beispielsweise die Bodenplatte eines Serverschranks bilden und/oder Teil eines Doppelbodens sein.

Im Folgenden wird die Erfindung anhand von Figuren näher beschrieben. Im Einzelnen zeigt
- Figur 1a - 1d: eine Darstellungen der erfindungsgemäßen Vorrichtung,
- Figur 2: eine dreidimensionale Darstellung der Unterseite des Rahmens der erfindungsgemäßen Vorrichtung,
- Figur 3a - 3c: eine Darstellungen des Rahmens und Seitenansichten des Rahmens und
- Figur 4: eine Darstellung der Oberseite des Rahmens der erfindungsgemäßen Vorrichtung.

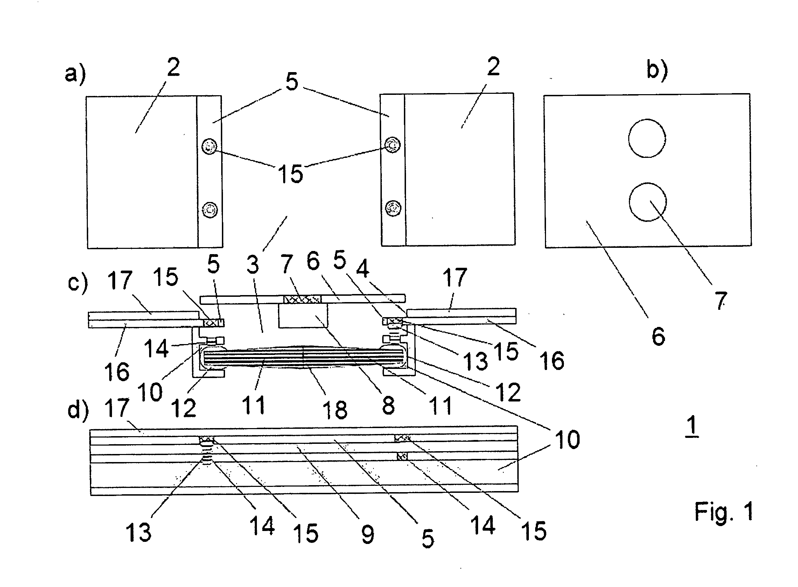

Die Figuren 1a bis 1d zeigen die erfindungsgemäße Vorrichtung 1 aus verschieden Blickwinkeln.

Die Figur 1a zeigt einen Ausschnitt des Rahmens 2, der in seiner Mitte eine Durchführungsöffnung 3 aufweist. An den inneren Rändern 4 weist die Innenwand 9 der Durchführungsöffnung 3 einen Absatz 5 zur Aufnahme des, in Figur 1b gezeigten, Deckels 6 auf.

Der in Figur 1b gezeigte Deckel 6 weist zwei Eingriffsöffnungen 7 auf an denen er angehoben werden kann. Der Deckel 6 ist so dimensioniert, dass er die Durchführungsöffnung 3 passgenau abdeckt. Die Durchführungsöffnung 3 und der in Figur 1b dargestellt Deckel 6 besitzen eine viereckige Grundfläche, es ist aber auch denkbar, dass die Grundfläche eine andere Form aufweist, beispielsweise rund oder oval.

Die Figur 1c zeigt einen Querschnitt durch die Vorrichtung 1.

Wie in Figur 1c gezeigt, ist unterhalb des Deckels 6 in Höhe der Eingriffsöffnungen 7 ein Gehäuse 8 angeordnet. Das Gehäuse 8 schließt die Eingriffsöffnungen 7 nach unten hin gasdicht ab, so dass kein Gasaustausch durch die Eingriffsöffnungen 7 stattfinden kann. Zudem schützt das Gehäuse 8 davor, dass man beim Einführen der Finger in die Eingriffsöffnungen 7 mit den Fingern in die Durchführungsöffnung 3 greift.

In der in Figur 1c gezeigten Darstellung liegt der Deckel 6 nicht auf den Absätzen 5 der Innenwand 9 der Durchführungsöffnung 3, sondern ist in dieser schematischen Darstellung über der Durchführungsöffnung 3 in einer angehobenen Position dargestellt.

Erfindungsgemäß liegt der Deckel 6 auf den Absätzen 5 der Innenwände 9 auf, so dass er werkzeugfrei befestigt werden kann. Der Deckel 6 schließt dabei bündig mit dem inneren Rand 4 des Rahmens 2 ab.

Es sind aber auch Ausführungsformen denkbar, bei denen der Deckel 6 mit einem oder mehreren Scharnieren, Schrauben oder anderen dem Fachmann bekannten Mittel befestigt ist.

Wie in der Figur 1c gezeigt, ist der Deckel 6, wie auch die gesamte Vorrichtung 1, derart ausgebildet, dass er mit der Oberfläche 16 des Rahmens 2 (Plattenoberfläche) eben abschießt.

Die Innenwände 9 der Durchführungsöffnung 3 sind derart ausgebildet, dass sie Aussparungen oder mindestens einen Bürstenborstenkanal 10 aufweisen, in dem die Bürstenborsten 11 und/oder eine Bürstenborstenleiste 12 mit Fixiermitteln reversibel fixierbar ist. In der in Figur 1c gezeigten Darstellung ist auf der linken und rechten Seite der Innenwand 9 eine Bürstenborstenleiste 12 in dem Bürstenborstenkanal 10 angeordnet und mit Fixiermitteln, in diesem Fall Schrauben 13, fixiert. Zur Fixierung der Schrauben 13 weist der obere Bereich des Bürstenborstenkanals 10 ein Gewinde 14 auf. Das Gewinde 14 kann aber auch im Absatz 5 angeordnet sein.

Die Bürstenborsten 11 sind derart angeordnet, dass die gesamte Durchführungsöffnung 3 mit Bürstenborsten 11 abgedeckt ist. Dazu sind die Bürstenborsten so angeordnet, dass ihre Enden 18 einander berühren oder sich ganz oder teilweise überlappen.

Die Figur 1d zeigt einen Ausschnitt der Innenwand 9 der Durchführungsöffnung 3 mit dem Bürstenborstenkanal 10 und dem Absatz 5 in dem sich Bohrungen 15 zur Aufnahme der Fixierungsmittel befinden. Denkbar sind auch Ausführungsformen der erfindungsgemäßen Vorrichtung 1, bei denen in der Innenwand 9 mehrere Bürstenborstenkanäle 10 parallel zueinander angeordnet sind, um die Aufnahme von mehreren Lagen von Bürstenborsten 11 zu ermöglichen.

Die Bürstenborsten 11 bestehen aus Kunststoff, wie zum Beispiel Nylon, oder aus natürlichen Materialien.

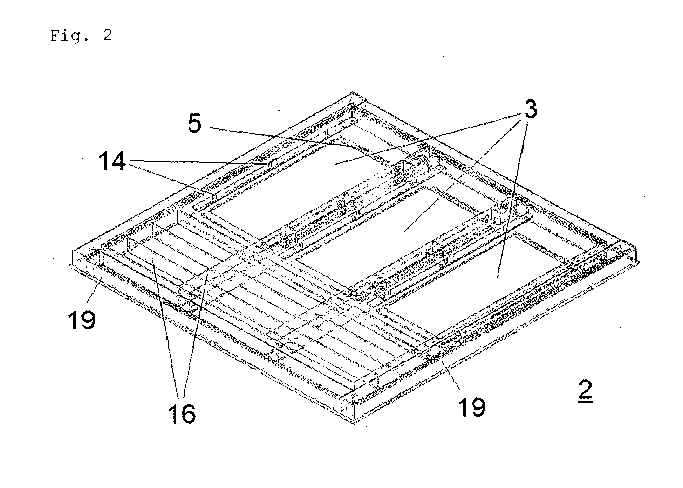

Die Figur 2 zeigt eine dreidimensionale Darstellung des Rahmens 2 von der Unterseite, d.h. von der Seite, die bei einer Montage der Vorrichtung 1 in einem Fussboden nach unten zeigt. In der in der Figur 2 gezeigten Ausführungsform weist der Rahmen 2 drei Durchführungsöffnungen 3 auf. Die Anzahl der Durchführungsöffnungen 3 kann variieren, so sind Ausführungsformen mit einer, zwei, drei oder mehreren Durchführungsöffnungen 3 denkbar. Zur Abdeckung der Durchführungsöffnungen 3 werden diese mit einem oder mehreren Deckeln 6 geschlossen. Dabei können mit einem Deckel 6 eine oder aber auch mehrere Durchführungsöffnungen 3 geschlossen werden.

Auf der Unterseite wird der Rahmen 2 durch (Quer- und/oder Längs-)Streben 16 verstärkt. Der Absatz 5 und/oder die Innenwand 9 können auch durch Streben 16 gebildet werden, wodurch der Rahmen 2 zusätzlich stabilisiert wird.

Der Rahmen 2 wird mit seinem äußeren Rand 19 an dem inneren Rand der Öffnung in der Wand oder einem Boden, beispielsweise durch Verschrauben, Einklemmen oder Einrasten, fixiert.

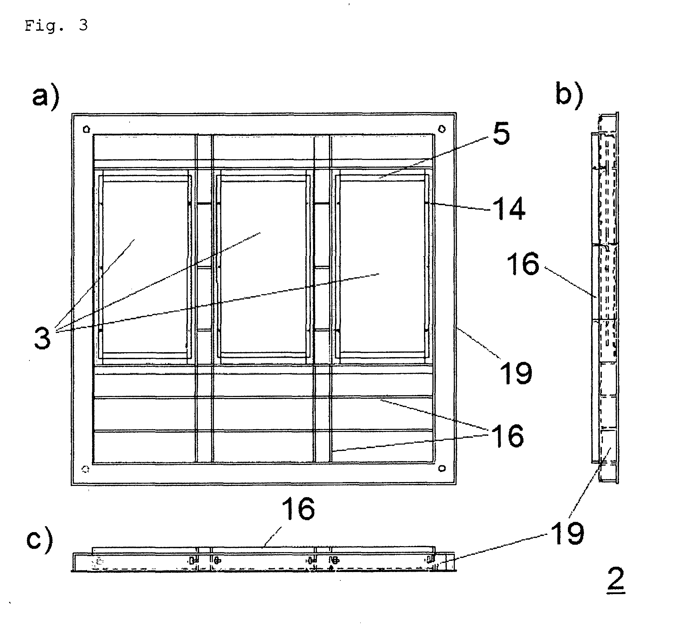

Die Figuren 3a bis 3b zeigen schematische Darstellungen des Rahmens 2 der Vorrichtung 1 und zwei Seitenansichten des Rahmens 2.

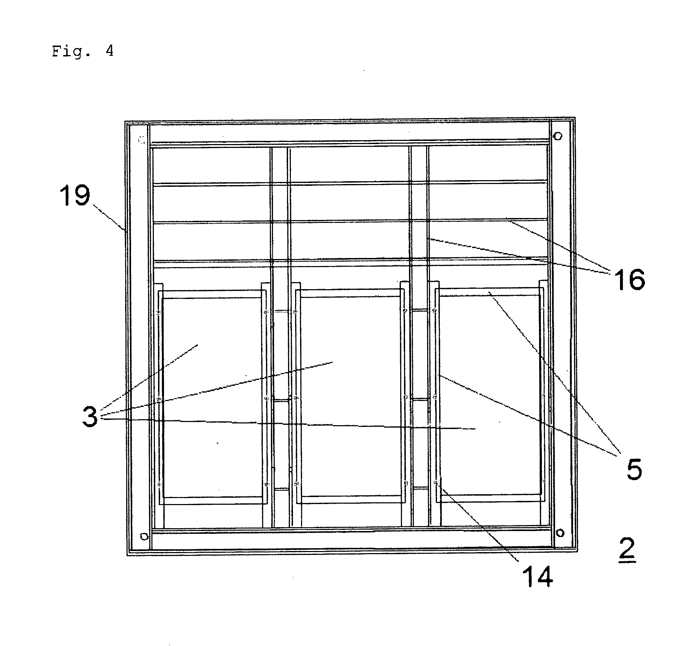

Die Figur 4 zeigt eine Skizze der Oberfläche 17 des Rahmens 2 mit drei Durchführungsöffnungen 3. Die Größe und Form der Durchführungsöffnungen 3 kann, je nach Bedarf, unterschiedlich gestaltet werden. Für Servergehäusewände hat sich eine Durchführungsöffnungen 3 zwischen 200 mm x 125 mm bis 295 mm x 125 mm als geeignet herausgestellt.

### Bezugszeichenliste:

- 1: Vorrichtung
- 2: Rahmen
- 3: Durchführungsöffnung
- 4: innerer Rand (der Durchführungsöffnung)
- 5: Absatz
- 6: Deckel
- 7: Eingriffsöffnung
- 8: Gehäuse
- 9: Innenwand
- 10: Bürstenborstenkanal
- 11: Bürstenborsten
- 12: Bürstenborstenleiste
- 13: Schraube
- 14: Gewinde
- 15: Bohrung
- 16: Strebe
- 17: Oberfläche des Rahmens
- 18: Enden (der Bürstenborsten)
- 19: äußerer Rand (des Rahmens)

## Patentansprüche

1. Vorrichtung (1) zur Durchführung einer oder mehrerer Leitungen durch eine Öffnung in einer Wand oder einem Boden, mit einem in der Öffnung angeordneten Rahmen (2), wobei
der Rahmen (2) eine oder mehrere Durchführungsöffnungen (3) bildet, die mit einem oder mehreren Deckeln (6) verschließbar sind,
der Rahmen (2) in der Öffnung in der Wand oder dem Boden versenkt ist,
der Rahmen (2) durch Quer- und/oder Längsstreben (16) verstärkt ist,
an der den inneren Rand (4) der Durchführungsöffnung (3) bildenden Innenwand (9) Aussparungen oder mindestens ein Bürstenborstenkanal (10) angeordnet ist, in dem die Bürstenborsten (11) und/oder eine Bürstenborstenleiste (12) mit Fixiermitteln reversibel fixiert sind,
wobei die Bürstenborsten (11) derart angeordnet sind, dass sie die Durchführungsöffnung (3) abdecken
wobei die Innenwand (9) der Durchführungsöffnung (3) einen Absatz (5) zur Aufnahme eines Deckels (6) aufweist, wobei die eine oder mehreren Durchführungsöffnungen (3) mittels eines oder mehrere Deckel (6) gasdicht verschließbar sind **dadurch gekennzeichnet, dass** die Deckel (6) mindestens eine Eingriffsöffnung (7) aufweisen und auf einer Seite des Deckels (6) ein Gehäuse (8) angebracht ist, dass einen Gasaustausch durch die Eingriffsöffnungen (7) verhindert,
die Fixiermittel Schrauben (13) sind und der obere Bereich des Bürstenborstenkanals (10) oder der Absatz (5) Gewinde (14) zur Fixierung der Schrauben (13) aufweist oder
die Fixiermittel Bolzen oder Stifte sind und die Bürstenborstenleiste (12) eine Bohrung aufweist, durch die ein Bolzen oder ein Stift schiebbar ist, wobei die Bürstenborstenleiste (12) durch einen Bolzen oder Stift verriegelbar ist.

2. Vorrichtung (1) nach Anspruch 1, **dadurch gekennzeichnet, dass** die Fixiermittel durch die Durchführungsöffnung (3) bedienbar sind, so dass die Bürstenborsten (11) durch die Durchführungsöffnung (3) austauschbar sind.

3. Vorrichtung (1) nach Anspruch 1 oder 2, **dadurch gekennzeichnet, dass** die Innenwand (9) der Durchführungsöffnung (3) einen Absatz (5) aufweist, auf dem der Deckel (6) reversibel angeordnet ist.

4. Vorrichtung (1) nach Anspruch 3, **dadurch gekennzeichnet, dass** der Rahmen (2) und der auf dem Absatz (5) der Innenwand (9) der Durchführungsöffnung (3) angeordnete Deckel (6) eine Ebene bilden.

## Claims

1. A device (1) for feeding one or more lines through an opening in a wall or a floor, having a frame (2) arranged in the opening, wherein
the frame (2) forms one or more feed-through openings (3) that are sealable by one or more covers (6),
the frame (2) is countersunk in the opening in the wall or the floor,
the frame (2) is strengthened by transverse and/or longitudinal struts (16),
the brush bristles (11) and/or a brush bristle strip (12) are reversibly fixed to an inner wall (9) having recesses or at least one brush bristle duct (10), which forms an inner rim (4) of the feed-through opening (3), by fixing means,
wherein the brush bristles (11) are arranged such that they cover the feed-through opening (3),
wherein the inner wall (9) of the feed-through opening (3) has a ledge (5) on which the cover (6) is arranged, wherein the one or more covers (6) closes off the one or more feed-through openings (3) such that they are gas-tight,
**characterised in that**
the cover (6) has at least one gripping opening (7) and there is mounted on one side of the cover (6) a housing (8) that prevents gas exchange through the gripping openings (7),
the fixing means are screws (13), and the upper region of the brush bristle duct (10) or the ledge (5) has a thread (14) for fixing the screws (13), or
the fixing means are bolts or pins, and the brush bristle strip (12) has a bore for pushing a bolt or a pin through the bore; wherein the brush bristle strip (12) is lockable by a bolt or a pin.

2. The device (1) as claimed in claim 1, **characterized in that** the fixing means may be operated through the feed-through opening (3), with the result that the brush bristles (11) may be replaced through the feed-through opening (3).

3. The device (1) according to claim 1 or 2, **characterized in that** the inner wall (9) of the feed-through opening (3) has a ledge (5) on which the cover (6) is reversibly arranged.

4. The device (1) according to claim 3, **characterized in that** the frame (2) and the cover (6), which is arranged on the ledge (5) on the inner wall (9) of the feed-through opening (3), are in one plane.

## Revendications

1. Dispositif (1) destiné au passage d'un ou de plusieurs câbles à travers une ouverture ménagée dans une paroi ou un sol, avec un cadre (2) disposé dans l'ouverture, dans lequel
le cadre (2) forme une ou plusieurs ouvertures de passage (3), qui peuvent être fermées au moyen d'un ou de plusieurs couvercles (6),
le cadre (2) est abaissé dans l'ouverture dans la paroi ou le sol,
le cadre (2) est renforcé par des entretoises transversales et/ou longitudinales (16),
à la paroi intérieure (9) formant le bord intérieur (4) de l'ouverture de passage (3) sont disposés des découpes ou au moins un canal à poils de brosse (10), dans lequel les poils de brosse (11) et/ou une latte de poils de brosse (12) sont fixés de façon réversible à l'aide de moyens de fixation,
dans lequel les poils de brosse (11) sont disposés de telle manière qu'ils recouvrent l'ouverture de passage (3),
dans lequel la paroi intérieure (9) de l'ouverture de passage (3) présente un rebord (5) destiné à recevoir un couvercle (6), dans lequel ladite une ou lesdites plusieurs ouvertures de passage (3) peut/peuvent être fermée(s) de façon étanche au gaz au moyen d'un ou de plusieurs couvercles (6),
**caractérisé en ce que** les couvercles (6) présentent au moins une ouverture d'engagement (7) et un boîtier (8) est installé sur un côté du couvercle (6) et empêche un échange de gaz à travers les ouvertures d'engagement (7),
les moyens de fixation sont des vis (13) et la région supérieure du canal à poils de brosse (10) ou le rebord (5) présente des filets (14) pour la fixation des vis (13), ou
les moyens de fixation sont des boulons ou des broches et la latte de poils de brosse (12) présente un alésage, à travers lequel un boulon ou une broche peut être inséré(e), dans lequel la latte de poils de brosse (12) peut être verrouillée par un boulon ou une broche.

2. Dispositif (1) selon la revendication 1, **caractérisé en ce que** les moyens de fixation peuvent être manoeuvrés à travers l'ouverture de passage (3), de telle manière que les poils de brosse (11) soient remplaçables à travers l'ouverture de passage (3).

3. Dispositif (1) selon la revendication 1 ou 2, **caractérisé en ce que** la paroi intérieure (9) de l'ouverture de passage (3) présente un rebord (5), sur lequel le couvercle (6) peut être disposé de façon réversible.

4. Dispositif (1) selon la revendication 3, **caractérisé en ce que** le cadre (2) et le couvercle (6) disposé sur le rebord (5) de la paroi intérieure (9) de l'ouverture de passage (3) forment un plan.
